# DEMANDE DE BREVET EUROPEEN

(11) **EP 1 160 501 A1**
(43) Date de publication de la demande: **05.12.2001**
(21) Numéro de dépôt: 01401271.0
(22) Date de dépôt: 16.05.2001
(51) Int. Cl.: F17C 3/04

(54) **Procédé de fabrication d'un réservoir pour fluide cryogénique et réservoir ainsi obtenu**

(30) Priorité: 26.05.2000 FR 0006774
(71) Demandeur: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Pelloux-Gervais, Pierre, 38180 Seyssins (FR); Sanglan, Patrick, 38180 Seyssins (FR)
(74) Mandataire: Le Moenner, Gabriel

(57) **Abrégé**

- L'invention concerne un réservoir pour fluide cryogénique, du type comprenant une cuve interne (2) destinée à recevoir le fluide cryogénique et délimitant avec une cuve externe (8), un espace (9) pour l'interposition d'une isolation thermique multicouche (7).
- Selon l'invention, le réservoir comporte une isolation thermique multicouche (7) assurant le support de la cuve interne (2) et une cuve externe (8) sans liaison rigide avec la cuve interne (2).

## Description

La présente invention concerne le domaine technique général de la fabrication de réservoirs pour fluides cryogéniques.

L'objet de l'invention vise, plus particulièrement, les réservoirs pour fluide cryogénique, calorifugés par la technique dite de super isolation.

Dans l'état de la technique, il est connu d'utiliser des réservoirs de fluide cryogénique, en l'occurrence de gaz liquéfiés tels que de l'hydrogène liquide ou de l'hélium liquide. Un tel réservoir comporte une cuve interne équipée de canalisations de remplissage et de soutirage pour le fluide cryogénique. Cette cuve interne est recouverte extérieurement d'une isolation thermique à haute performance pour éviter une évaporation trop rapide du fluide stocké. Cette cuve est ainsi calorifugée par la technique dite de la super isolation, visant à la mise en place d'une isolation thermique multicouche constituée par une superposition d'un réflecteur thermique et d'un intercalaire isolant thermiquement. De manière classique, cette isolation thermique multicouche est réalisée au moyen de l'enroulement d'au moins une bande isolante constituée, notamment, par la superposition d'une feuille mince d'aluminium formant réflecteur et d'une feuille de papier isolant ou de fibre de verre formant intercalaire. L'enroulement de la bande isolante est réalisé au moyen d'une machine de calorifugeage qui enroule la bande autour de la cuve, tandis que cette dernière est entraînée en rotation autour de son axe.

Le réservoir comporte également une cuve externe de protection destinée à entourer l'isolation thermique multicouche. Cette cuve externe, qui est généralement constituée en deux parties, est assemblée à la cuve interne par l'intermédiaire de supports de liaison du type tirants ou pieds de centrage traversant l'isolation thermique multicouche. En pratique, la mise en place des supports sur les cuves et l'assemblage des cuves entre elles constituent des opérations coûteuses et délicates à mener à bien.

Aussi, il apparaît le besoin de pouvoir disposer d'une technique de fabrication d'un réservoir pour fluide cryogénique, adaptée pour être simple, peu onéreuse et susceptible d'être réalisée de façon automatique, tout en permettant la mise en place d'une isolation thermique performante qui ne conduise pas à une augmentation de l'encombrement du réservoir pour un volume donné de stockage du fluide cryogénique.

L'objet de l'invention vise donc à satisfaire ce besoin en proposant un procédé de fabrication d'un réservoir destiné à contenir un fluide cryogénique, le procédé étant adapté pour être simple, réalisable de façon automatique, peu onéreux, tout en permettant d'obtenir une isolation thermique performante présentant un encombrement limité pour l'obtention d'un réservoir léger, peu onéreux et performant, notamment pour utilisation dans des véhicules terrestres ou aériens.

L'objet de l'invention concerne donc un procédé de fabrication d'un réservoir destiné à contenir un fluide cryogénique, le procédé consistant à assurer le montage d'une cuve interne destinée à recevoir le fluide cryogénique, à l'intérieur d'une cuve externe de protection délimitant avec la cuve interne, un espace pour l'interposition d'une isolation thermique multicouche.

Selon l'invention, le procédé consiste :
- à monter l'isolation thermique multicouche autour de la cuve interne, de manière que ladite isolation thermique assure le support de la cuve interne,
- et à monter la cuve externe autour de l'isolation thermique multicouche, sans liaison rigide avec la cuve interne.

L'objet de l'invention concerne également un réservoir pour fluide cryogénique du type comprenant une cuve interne destinée à recevoir le fluide cryogénique et délimitant avec une cuve externe, un espace pour l'interposition d'une isolation thermique multicouche. Selon l'invention, le réservoir comporte une isolation thermique multicouche assurant à elle seule, via des intercalaires isolants, le support de la cuve interne et une cuve externe sans liaison rigide avec la cuve interne.

Un autre objet de l'invention concerne une machine à calorifuger mettant en oeuvre le procédé de fabrication d'un réservoir pour fluide cryogénique, la machine comprenant des moyens pour entraîner en rotation, autour de son axe, une cuve interne pour fluide cryogénique et des moyens pour enrouler autour de la cuve interne, une bande isolante formant plusieurs couches isolantes superposées, constituées chacune d'un intercalaire isolant thermiquement et d'un réflecteur thermique.

Selon l'invention, la machine comporte des moyens pour enrouler au moins localement autour de la cuve interne, au moins une série de bandes d'isolation thermique intercalées de façon superposée entre les réflecteurs thermiques pour assurer le support de la cuve interne et la séparation entre les réflecteurs thermiques.

Diverses autres caractéristiques ressortent de la description faite ci-dessous en référence aux dessins annexés qui montrent, à titre d'exemples non limitatifs, des formes de réalisation et de mise en oeuvre de l'objet de l'invention.

Les fig. 1 et 2 illustrent deux variantes de réalisation d'un réservoir conforme à l'invention.

La fig. 3 est un schéma montrant une machine d'enrubannage permettant la mise en oeuvre du procédé conforme à l'invention.

La fig. 4 est un autre exemple de réalisation d'un réservoir conforme à l'invention.

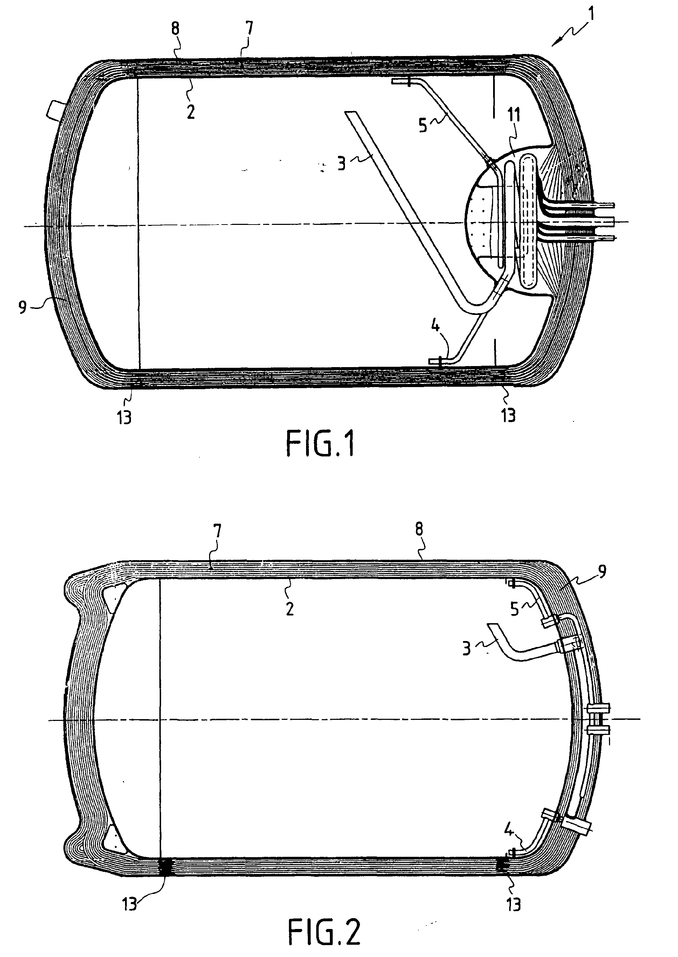

La fig. 1 illustre un exemple de réalisation d'un réservoir 1 pour fluide cryogénique en l'occurrence de gaz liquéfiés, tel que de l'hydrogène liquide ou de l'hélium liquide. Un tel réservoir 1 peut assurer un stockage fixe ou être installé sur un véhicule.

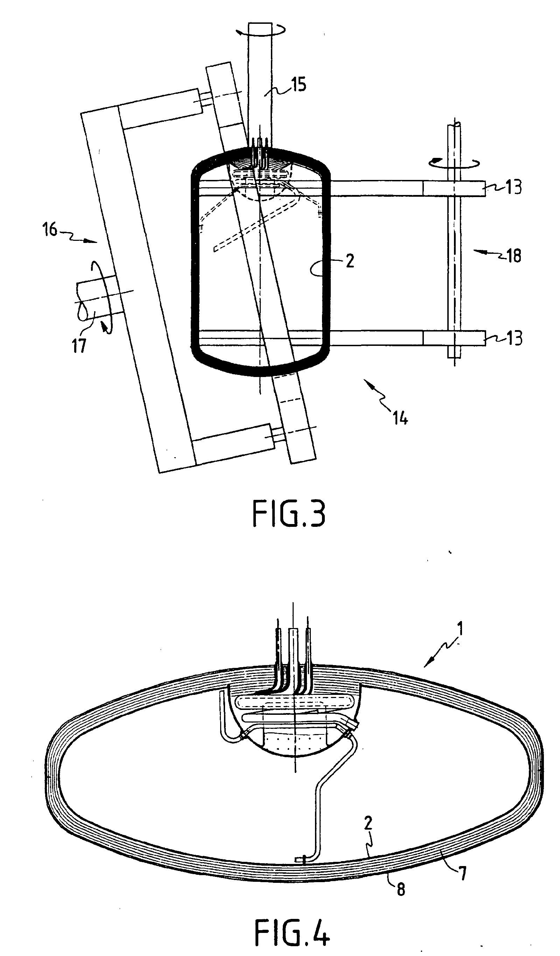

Le réservoir 1 comporte une cuve interne 2 à résistance de forme, réalisée en toute matière appropriée, comme par exemple en aluminium, en acier inoxydable ou en matière plastique. Cette cuve interne 2 est équipée classiquement, de canalisations de remplissage en fluide 3 et de soutirage liquide 4 et gazeux 5. La cuve interne 2 est, de manière classique, calorifugée par une isolation thermique 7 à haute performance, réalisée selon la technique dite de la super isolation. L'isolation thermique 7 est réalisée classiquement par l'intermédiaire d'une machine qui sera décrite plus précisément à la fig. 4. Cette isolation thermique 7 est obtenue par l'intermédiaire d'une bande isolante formant une succession de couches isolantes superposées. La bande isolante peut être constituée par la superposition d'un réflecteur thermique, tel qu'une feuille mince d'aluminium, et d'un intercalaire d'isolation thermique, tel qu'une feuille de papier isolant ou de fibre de verre.

Le réservoir 1 comporte également une cuve externe ou enveloppe de protection 8 à résistance de forme, montée à distance de la cuve interne 2 pour délimiter avec cette dernière un espace 9 dans lequel prend place l'isolation thermique 7. Par exemple, la cuve externe 8 est réalisée en deux parties assemblées entre elles par tous moyens appropriés. Bien entendu, les canalisations de remplissage 3 et de soutirage 4, 5 sont adaptées pour traverser l'isolation thermique 7 et la cuve externe 8, afin d'être accessible de l'extérieur du réservoir 1. Il est à noter que dans l'exemple illustré à la fig. 1, les canalisations de remplissage 3 et de soutirage 4, 5 comportent chacune une partie en forme de lyre entièrement intégrée dans un dégagement ou volume en creux 11 aménagé dans la cuve interne 2. Ces parties en forme de lyre sont prolongées par des parties rectilignes traversant l'espace inter cuve 9 permettant de faciliter la mise en place de l'isolation thermique 7. Bien entendu, ces parties en forme de lyre des canalisations 3, 4, 5 peuvent, de façon classique, être agencées dans l'épaisseur de l'espace inter cuve 9, comme cela ressort plus précisément de la fig. 2.

Conformément à l'invention, l'isolation thermique 7 est montée autour de la cuve interne 2 de manière que cette isolation thermique 7 assure in fine le support de la cuve interne 2. L'isolation thermique 7 est ainsi adaptée pour supporter la masse totale de la cuve interne 2. Compte tenu de la faible densité de liquides cryogéniques, tels que l'hydrogène liquide et l'hélium liquide, il est possible de supprimer entièrement les éléments-structurels de liaison rigide entre la cuve externe 8 et la cuve interne 2. En d'autres termes, la cuve externe 8 est assemblée autour de l'isolation thermique 7 sans aucune liaison rigide avec la cuve interne 2. Le support de la cuve interne 2 dans la cuve enveloppe 8 est donc uniquement assuré par l'isolation thermique 7. A cet égard, les canalisations de remplissage/soutirage 3-5 présentent un caractère souple ou flexible, de manière qu'elles n'établissent pas une liaison rigide entre la cuve interne 2 et la cuve externe 8. Le caractère souple des canalisations 3-5 peut être obtenu par leur conformation en forme de lyre et/ou par leur réalisation en un matériau souple ou flexible. Par ailleurs, dans la mesure où l'isolation thermique 7 entoure entièrement la cuve interne 2 et se trouve interposée entre la cuve interne 2 et la cuve externe 8, l'isolation thermique 7 permet de maintenir en position la cuve interne 2 par rapport à la cuve externe 8.

Bien entendu, l'isolation thermique 7 est dimensionnée pour assurer le support de la cuve interne 2, dont la masse dépend notamment du volume de la cuve et du liquide cryogénique contenu dans cette cuve. Le dimensionnement de l'isolation thermique 7 est déterminé de sorte que cette isolation thermique conserve ses propriétés d'isolation. thermique, quels que soient les efforts de compression qu'elle subit. En effet, l'isolation thermique 7 est soumise à des contraintes dues soit à des sollicitations externes, telles que des vibrations apparaissant pour un réservoir monté sur un véhicule, soit à une déformation de la cuve interne 2 en raison des variations de température et de pression. Ainsi, l'isolation thermique multicouche 7 comporte des couches intercalaires en matériaux adaptés pour assurer l'isolation thermique entre les réflecteurs thermiques tout en tenant compte des contraintes appliquées. Selon une caractéristique de réalisation, il peut être envisagé de monter la cuve externe 8 de manière à précontraindre l'isolation thermique multicouche 7, en vue de compenser les jeux de déformation dus aux efforts de compression susceptibles d'intervenir à l'usage, notamment à bord de véhicules.

Selon une autre caractéristique de réalisation, il est avantageux d'interposer, au moins localement, de façon superposée, entre les réflecteurs thermiques, des bandes 13 d'isolation thermique intercalaires assurant l'essentiel du support de la cuve interne et la séparation entre les réflecteurs thermiques. Tel que cela ressort plus précisément des fig. 1 et 2, la pression de contact de la cuve interne 2 est ainsi localisée sur ces bandes d'isolation thermique 13, de sorte que les propriétés intrinsèques de l'isolation thermique multicouche peuvent être conservées. En effet, la présence de ces bandes d'isolation thermique 13 permet d'éviter la compression ou le tassement des intercalaires, ce qui aurait pour effet de dégrader l'isolation thermique. Il est à noter que ces bandes 13 d'isolation thermique ou intercalaires peuvent être localisées ou réparties à la surface de la cuve interne 2 et se trouvent constituées, par exemple, par une feuille de papier isolant ou de fibre de verre.

La fig. 3 illustre un exemple de réalisation d'une machine 14 à calorifuger connue en soi, modifiée pour permettre la mise en place des bandes d'isolation thermique 13. Classiquement, cette machine comporte un arbre 15 entraîné en rotation et à l'extrémité duquel est montée la cuve interne 2. Cette machine 14 comporte, par ailleurs, un ensemble d'enrubannage 16 d'une bande isolante, dont le bobinage autour de la cuve permet d'obtenir l'isolation thermique multicouche. L'ensemble d'enrubannage 16 est ainsi équipé de bobines de bandes d'isolation et d'aluminium. Un tel ensemble d'enrubannage 16 est monté en rotation de la manière habituelle autour d'un axe 17 incliné par rapport à l'axe de l'arbre 15. Conformément à l'invention, cette machine à calorifuger 14 comporte des moyens 18 pour enrouler au moins localement autour de la cuve 2, une série de bandes d'isolation thermique 13, par exemple en papier ou en fibre de verre, destinées à s'intercaler de façon superposée entre les bandes d'isolation et les réflecteurs de l'ensemble 16.

Tel que cela ressort de la description qui précède, le réservoir cryogénique 1 peut être fabriqué simplement et rapidement compte tenu de l'absence d'opérations d'assemblage entre la cuve interne 2 et la cuve externe 8. L'utilisation de l'isolation thermique 7 comme support de la cuve interne 2 autorise une automatisation des opérations de fabrication d'un tel réservoir. De plus, il peut être obtenu une isolation thermique performante dont l'encombrement n'est pratiquement pas augmenté alors que cette isolation thermique assume des fonctions de support et de maintien pour la cuve interne 2. Compte tenu du support de la cuve interne 2 par l'intermédiaire de l'isolation thermique 7, la cuve externe 8 est montée de toute manière appropriée pour entourer l'isolation thermique, comme par exemple, en deux parties assemblées entre elles.

L'objet de l'invention trouve une application particulièrement avantageuse pour réaliser un réservoir pour fluide cryogénique destiné à être embarqué sur un véhicule. En effet, conformément à l'invention, on peut réaliser de façon simple et peu onéreuse des réservoirs avec des formes très variées présentant un encombrement réduit et une isolation thermique performante. La fig. 4 illustre, à titre d'exemple, un autre exemple de réalisation d'un réservoir 1 conforme à l'invention, dont la section transversale est différente de celles des réservoirs illustrés aux fig. 1 et 2.

L'invention n'est pas limitée aux exemples décrits et représentés, car diverses modifications peuvent y être apportées sans sortir de son cadre.

## Revendications

1. Procédé de fabrication d'un réservoir (1) destiné à contenir un fluide cryogénique, le procédé consistant à assurer le montage d'une cuve interne (2) destinée à recevoir le fluide cryogénique, à l'intérieur d'une cuve externe de protection (8) délimitant, avec la cuve interne, un espace (9) pour l'interposition d'une isolation thermique multicouche (7), **caractérisé en ce qu'**il consiste :
- à monter l'isolation thermique multicouche (7) autour de la cuve interne (2), de manière que ladite isolation thermique assure le support de la cuve interne (2),
- et à monter la cuve externe (9) autour de l'isolation thermique multicouche (7), sans liaison rigide avec la cuve interne (2).

2. Procédé selon la revendication 1, **caractérisé en ce qu'**il consiste à monter l'isolation thermique (7) en superposant successivement un réflecteur thermique et au moins un intercalaire isolant thermiquement, de sorte que lesdits intercalaires assurent le support de la cuve interne (2) et la séparation entre les réflecteurs thermiques.

3. Procédé selon la revendication 2, **caractérisé en ce qu'**il consiste à interposer au moins localement, de façon superposée, entre les réflecteurs thermiques, des bandes d'isolation thermique (13) assurant le support de la cuve interne (2) et la séparation entre les réflecteurs thermiques.

4. Procédé selon l'une des revendications 1 à 3, **caractérisé en ce qu'**il consiste à monter la cuve externe (8), de manière à pré-contraindre l'isolation thermique multicouche (7).

5. Procédé selon la revendication 1, **caractérisé en ce qu'**il consiste à équiper la cuve interne (2) par des canalisations souples de remplissage (3) et de soutirage (4, 5), traversant l'isolation thermique multicouche (7) et la cuve externe (8).

6. Réservoir pour fluide cryogénique, comprenant une cuve interne destinée à recevoir le fluide cryogénique, une cuve externe, et, dans l'espace entre les cuves, une isolation thermique multicouche, **caractérisé en ce qu'**il comporte une isolation thermique multicouche (7) constituée par la superposition successive d'au moins un réflecteur thermique et d'au moins une couche intercalaire thermiquement isolante assurant le support de la cuve interne (2) et la séparation entre les réflecteurs thermiques, aucune liaison rigide n'exisant entre les cuves (2, 8).

7. Réservoir selon la revendication 6, **caractérisé en ce que** l'isolation thermique multicouche (7) comporte, au moins localement, au moins une série de bandes d'isolation thermique (13) intercalées de façon superposée entre les réflecteurs thermiques, pour assurer le support de la cuve interne (2) et la séparation entre les réflecteurs thermiques.

8. Réservoir selon l'une des revendications 6 ou 7, **caractérisé en ce que** la cuve interne (2) comporte un dégagement (11) dans lequel est logé une partie des canalisations (3, 4, 5) de passage du fluide cryogénique.

9. Réservoir selon l'une des revendications 6 à 8, **caractérisé en ce qu'**il contient de l'hydrogène liquide ou de l'hélium liquide.

10. Machine à calorifuger mettant en oeuvre le procédé de fabrication d'un réservoir (1) pour fluide cryogénique conforme à l'une des revendications 1 à 5, la machine comprenant des moyens (15) pour entraîner en rotation, autour de son axe (15), une cuve interne (2) pour fluide cryogénique et des moyens (16) pour enrouler autour de la cuve interne, une bande isolante formant plusieurs couches isolantes superposées, constituées chacune d'un intercalaire isolant thermiquement et d'un réflecteur thermique, **caractérisée en ce qu'**elle comporte des moyens (18) pour enrouler au moins localement autour de la cuve interne, au moins une série de bandes d'isolation thermique (13) intercalées de façon superposée entre les réflecteurs thermiques pour assurer le support de la cuve interne (2) et la séparation entre les réflecteurs thermiques.
